**Europäisches Patentamt**

**European Patent Office**

**Office européen des brevets**

(19)

(11) Veröffentlichungsnummer: **0 080 145**

**B1**

(12) # EUROPÄISCHE PATENTSCHRIFT

(45) Veröffentlichungstag der Patentschrift:
**15.10.86**

(21) Anmeldenummer: **82110550.9**

(22) Anmeldetag: **16.11.82**

(51) Int. Cl.⁴: **F 16 K 11/04**

(54) **Absperrorgan für Doppelrohre.**

(30) Priorität: **19.11.81 DE 3145701**

(43) Veröffentlichungstag der Anmeldung:
**01.06.83 Patentblatt 83/22**

(45) Bekanntmachung des Hinweises auf die Patenterteilung:
**15.10.86 Patentblatt 86/42**

(84) Benannte Vertragsstaaten:
**AT BE CH DE FR IT LI LU NL SE**

(56) Entgegenhaltungen:
**CH-A-488 953**
**DD-A-99 210**
**DE-A-1 813 628**
**DE-A-2 259 698**
**DE-U-1 954 248**
**FR-A-1 328 943**
**US-A-1 919 234**

(73) Patentinhaber: **Grammer, Meinrad, Geigerweg 4,
D-7407 Rottenburg 15- Ergenzingen (DE)**

(72) Erfinder: **Grammer, Meinrad, Geigerweg 4, D-7407
Rottenburg 15- Ergenzingen (DE)**

(74) Vertreter: **Ott, Elmar, Dipl.- Ing., Kappelstrasse 8,
D-7240 Horb 1 (DE)**

## Beschreibung

Die Erfindung bezieht sich auf ein Absperrorgan für Doppelrohre gemäß Gattungsbegriff des Hauptanspruchs. Ein solches Absperrorgan ist allgemein bekannt.

In Heizungsanlagen werden die Vor- und Rücklaufleitungen der verschiedenen Heizkreise über Ventile an die Heizungsanlage angeschlossen. Für jede Vorlaufleitung und jede Rücklaufleitung ist jeweils ein Ventil einzusetzen. Sollen die Vorlaufleitungen und die Rücklaufleitungen jeweils in einem gemeinsamen Doppelrohr geführt werden, so können die gebräuchlichen Ventile nur dann Verwendung finden, wenn die Doppelrohre für den Anschluß der beiden Ventile in Einzelrohre aufgeteilt werden.

Bei Verwendung bekannter Ventile sind für den Anschluß eines Heizkreises jeweils zwei solche Ventile erforderlich. Zum Absperren oder Öffnen eines Heizkreises mussen dann jeweils zwei Ventile betätigt werden. Sollen die Ventile beispielsweise an einem Rohrverteiler angebracht werden, so muß zwischen den Ventilen ein gewisser Abstand für die Montage und die Betätigung der Ventile bestehen.

Aus der FR-A-1 328 943 ist zwar ein Absperrorgan für dreifache Rohre bekannt, mit dem die Rohre eines Dreifachrohres gleichzeitig gesperrt oder geöffnet werden können. Hierzu besitzt dieses bekannte Absperrorgan ein dreifach wirkendes Ventil mit einem gemeinsamen Betätigungselement. Dieses bekannte Absperrorgan ist jedoch für den Anschluß von Doppelrohren, die ein äußeres und ein inneres Rohr besitzen, nicht geeignet, da die Anschlüsse separat aus dem Gehäuse des Absperrorgans herausgeführt werden. Es können daher nur nebeneinander angeordnete Rohre angeschlossen werden.

Der Erfindung liegt die Aufgabe zugrunde, ein Absperrorgan zu schaffen, welches für den Anschluß von ineinanderliegenden Doppelrohren geeignet ist und möglichst wenig Platz beansprucht.

Die Lösung dieser Aufgabe wird durch die im Hauptanspruch angegebenen Merkmale erhalten.

Mit dem erfindungsgemäßen Absperrorgan können Vorlauf- und Rücklaufleitung eines Heizkreises über ein gemeinsames Betätigungselement gleichzeitig geöffnet oder geschlossen werden. Außerdem benötigt das erfindungsgemäße Absperrorgan keine besondere Rohrverzweigung, um es an ein Doppelrohr anschließen zu können, wodurch sich eine erhebliche Platzersparnis ergibt. Für den Anschluß an Doppelrohre mit konzentrischem Innenrohr oder mit asymmetrischem Innenrohr, sind die Absperrorgane im Bereich ihrer Anschlußstücke mit entsprechend angeordnetem äußeren und inneren Zu- oder Abfluß versehen. Die Anschlußstücke sind dabei an das Ventilgehäuse angeformt, wodurch sich eine sehr kompakte Ausführung für das Absperrorgan ergibt.

Damit das Absperrorgan unter Verwendung von Dichtungsringen auf einfache Weise an einem anzuschließenden Doppelrohr befestigt werden kann, sieht eine Weiterbildung der Erfindung vor, daß die anschlußseitigen Öffnungen für den äußeren und den inneren Zu- oder Abfluß in einer Ebene liegen.

Die Erfindung wird nachfolgend anhand der Zeichnungen näher erläutert. Es zeigen:

Fig. 1 den Längsschnitt eines erfindungsgemäßen Absperrorganes,

Fig. 2 das erfindungsgemäße Absperrorgan im Querschnitt,

Fig. 3 eine schematische Darstellung des Absperrorganes,

Fig. 4 eine Anwendungsmöglichkeit für das erfindungsgemäße Absperrorgan.

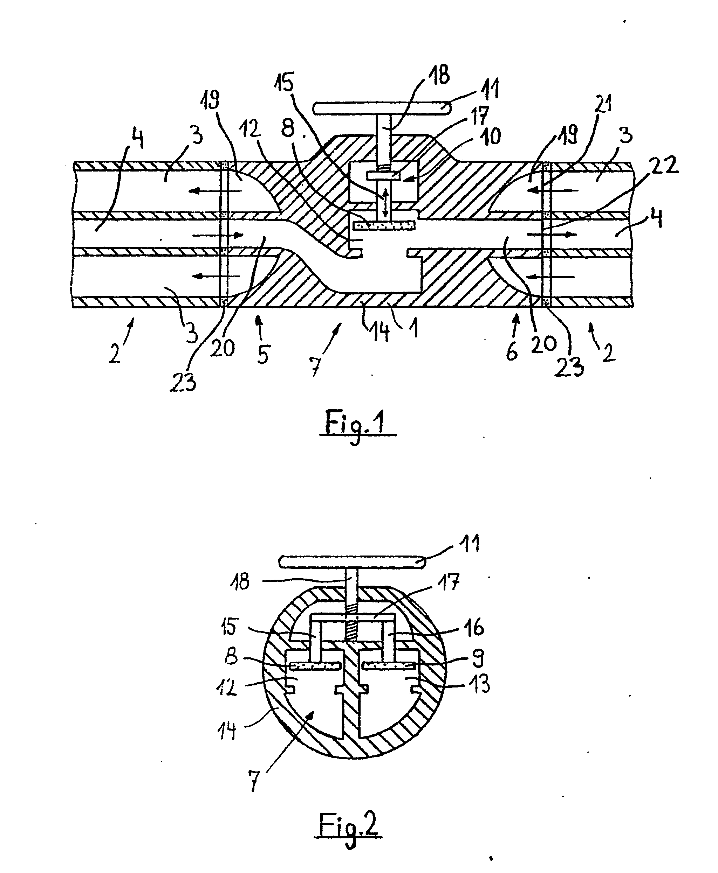

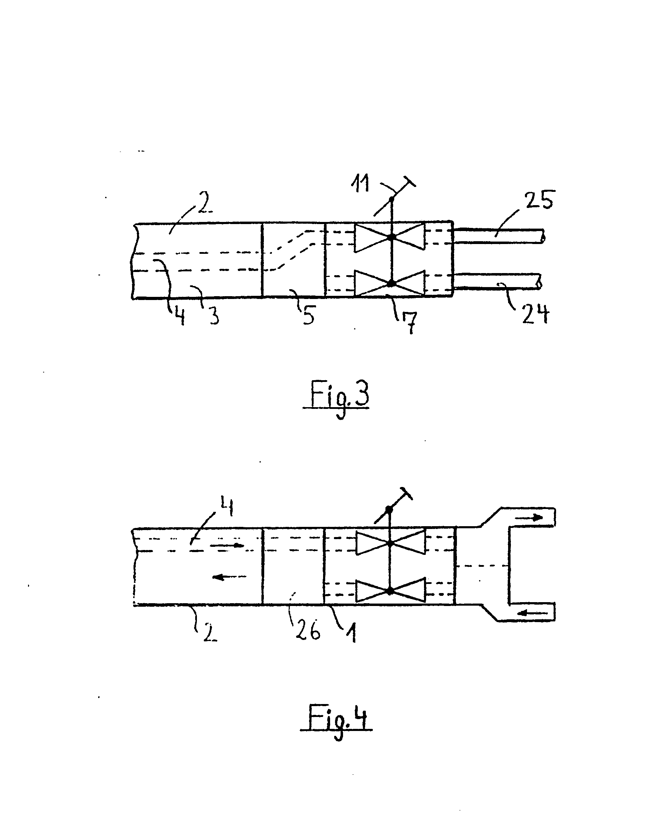

Das in Fig. 1 dargestellte Absperrorgan 1 kann zwischen zwei Doppelrohre 2 eingesetzt sein. Jedes der Doppelrohre 2 besteht aus einem Außenrohr 3 und einem Innenrohr 4, die jeweils an einem Anschlußstück 5; 6 angeschlossen sind. Im dargestellten Ausführungsbeispiel sind die Anschlußstücke 5, 6 am Absperrorgan 1 angeformt.

In das Absperrorgan 1 ist ein Doppelventil 7 integriert. Für die beiden Ventilverschlüsse sind beispielsweise zwei Ventilteller 8, 9 vorgesehen, die an den beiden Enden eines u-förmigen Bügels 10 befestigt sind. Über ein Betätigungselement 11 können die Ventilteller 8, 9 in ihren beiden getrennten Ventilkammern 12, 13 verstellt werden.

Der Bügel 10 kann beispielsweise aus einer Querstange 17 und zwei Ventilstangen 15, 16 bestehen, an deren einem Ende jeweils ein Ventilteller 8 bzw. 9 befestigt ist (Fig. 2). Das Öffnen und Schließen der beiden Ventile erfolgt über ein gemeinsames Betätigungselement 11, das an einer Spindel 18 befestigt ist, die an der Querstange 17 angreift. Zu diesem Zweck kann die Spindel 18 im Bereich der Querstange 17 ein Außengewinde aufweisen, welches in ein an der Querstange 17 befindliches Innengewinde eingreift. Durch Drehung des Betätigungselementes 11 können damit die Ventilteller 8, 9 angehoben oder gesenkt werden, wodurch beide Ventilkammern 12, 13 des Doppelventils 7 gemeinsam geöffnet oder geschlossen werden können.

Im dargestellten Ausführungsbeispiel sind beide Ventilkammern 12, 13 des Doppelventils 7 in einem gemeinsamen Gehäuse 14 untergebracht. Als Ventilverschlüsse sind hier beispielsweise Ventilteller 8, 9 verwendet worden. Die Ventilverschlüsse können aber auch Ventilkegel, konische Verschlüsse, über Kipphebel betätigte Ventilteller oder drgl. sein.

Wie in Fig. 1 ersichtlich ist, hat das dort dargestellte Absperrorgan auf jeder Anschlußseite einen äußeren und einen inneren Zu- oder Abfluß 19, 20. Am linken Anschlußstück 5 ist ein äußerer Abfluß 19 mit dem Außenrohr 3 eines angeschlossenen Doppelrohres 2 verbunden. Das Innenrohr 4 ist an dem inneren Zufluß 20 angeschlossen. Die in den Rohren eingezeichneten Pfeile geben die Strömungsrichtung an. Die für den Abfluß 19 und Zufluß 20 vorgesehenen Öffnungen 21, 22 liegen vorzugsweise in einer Ebene, wenn die entsprechenden Rohrenden eines anzuschließenden Doppelrohres ebenfalls in einer Ebene liegen. Mit einfachen Dichtungselementen 23 können dann die Doppelrohre 2 dicht am Absperrorgan 1 befestigt werden.

In Fig. 3 ist das Prinzip des erfindungsgemäßen Absperrorganes dargestellt. Ein Doppelrohr 2 mit konzentrischem Innenrohr 4 ist an einem Absperrorgan 1 angeschlossen. Über ein Anschlußstück 5 werden das Außenrohr 3 und das Innenrohr 4 getrennt dem Doppelventil 7 zugeführt. Am anderen Ende des Doppelventiles 7 können zwei getrennte Rohrleitungen 24, 25 angeschlossen sein, wie dies hier dargestellt ist. Selbstverständlich kann auch an diesem Ende des Doppelventiles 7 ein Anschlußstück angebracht sein, mit dem eine Anpassung an ein Doppelrohr erfolgt.

In Fig. 4 ist das Absperrorgan 1 mit einem asymmetrischen Anschlußstück 26 bestückt, so daß der Anschluß eines Doppelrohres 2 mit asymmetrischem Innenrohr 4 ermöglicht wird.

**Patentansprüche**

1. Absperrorgan für Einbau zwischen zwei Doppelrohre (2) die jedes aus einem Außenrohr (3) und einem Innenrohr (4) bestehen, wobei das Absperrorgan beide Rohre (3, 4) des Doppelrohres gleichzeitig sperren oder öffnen soll, dadurch gekennzeichnet, daß in einem gemeinsamen Ventilgehäuse (14) zwei getrennnte Ventilkammern (12, 13) angeordnet sind; daß in jeder Ventilkammer (12, 13) ein Ventilsitz und ein Verschlußteil (8, 9) angeordnet ist; daß auf beide Verschlußteile (8, 9) ein gemeinsames Betätigungselement (11) wirkt und daß an das Ventilgehäuse (14) beiderseits Anschlußstutzen (5, 6) angeformt sind welche anschlußseitig jeweils einen äußeren und einen inneren Zufluß bzw. Abfluß (19, 20) haben.

2. Absperrorgan nach Anspruch 1, dadurch gekennzeichnet, daß der innere Zu- oder Abfluß (20) konzentrisch zum äußeren Zu- oder Abfluß (19) angeordnet ist.

3. Absperrorgan nach einem der Ansprüche 1 oder 2, dadurch gekennzeichnet, daß die anschlußseitigen Öffnungen (21, 22) für den äußeren und inneren Zu- oder Abfluß (19, 20) in einer Ebene liegen.

4. Absperrorgan nach einem der vorhergehenden Ansprüche, dadurch gekennzeichnet, daß die beiden Ventilverschlüsse Ventilteller (8, 9) sind, die jeweils an einem Ende zweier Ventilstangen (15, 16) befestigt sind; daß die beiden anderen Enden der Ventilstangen (15, 16) aus dem Ventilgehäuse (14) herausgeführt und mittels einer Querstange (17) miteinander verbunden sind; und daß zum Verschieben der Querstange (17) eine mit dem Betätigungselement (11) verbundene Spindel (18) an der Querstange (17) eingreift.

**Revendications**

1. Organe d'arrêt à monter entre deux deux doublestuyaux (2) chacun composé d'un tuyau externe (3) et d'un tuyau interne (4), l'organe d'arrêt servant à fermer ou à ouvrir simulanément les deux tuyaux (3, 4) du double-tuyau et étant caractérisé par le fait que deux chambres de soupape séparées (12, 13) sont logées dans une cage de soupape commune (14); qu'un siège de soupape et qu'un élément de fermeture (8, 9) sont logés dans chaque chambre de soupape (12, 13); qu'un élément de manoeuvre commun (11) agit sur les deux éléments de fermeture (8, 9) et que deux raccords (5, 6) sont moulés sur chaque côté de la cage de soupape (14) et possèdent chacun sur le côté raccordement une entrée et/ou un écoulement externe et interne (19, 20).

2. Organe d'arrêt selon demande 1, catactérisé par le fait que l'entrée ou l'écoulement interne (20) est concentrique par rapport à l'éntrée ou l'ecoulement externe (19).

3. Organe d'arrêt selon une des demandes 1 ou 2, caractérisé par le fait que les ouvertures sur le côté raccordement (21, 22) pour l'entrée ou l'écoulement externe et interne (19, 20) sont situées sur un plan.

4. Organe d'arrêt selon une des demandes précédences, caractérisé par le fait que les deux fermetures de soupape sont des têtes de soupape (8, 9) fixées chacune à une extrémité de deux tiges de soupape (15, 16); que les deux autres extrémités des tiges de soupape (15, 16) sortent de la cage de soupape (14) et sont connectées entre elles par une traverse (17); et que pour manoeuvrer la traverse (17), une broche (18) reliée à l'élément de manoeuvre (11) a prise sur la traverse (17).

**Claims**

1. Shutoff device for fitting between two double pipes (2), each comprising an outer pipe (3) and an inner pipe (4) the shutoff device serving to simultaneously close or open the two pipes (3, 4) of the double pipe, characterized in that two separate valve chambers (12 13) are arranged in a common valve casing (14), that a valve seat and a closure (8, 9) are located in each valve chamber (12, 13), that a common actuating member (11) acts on both closures (8, 9) and that connecting pieces (5, 6) are shaped onto either side of the valve casing (14) and on the connection side have in each case an outer and an inner inlet or outlet (19, 20).

2. Shutoff device according to claim 1, characterized in that the inner inlet or outlet (20) is arranged concentrically to the outer inlet or outlet (19).

3. Shutoff device according to one of the claims 1 or 2, characterized in that the connection side openings (21, 22) for the outer and inner inlet or outlet (19, 20) are located in one plane.

4. Shutoff device according to one of the preceding claims, wherein the two valve closures are valve disks (8, 9), which are in each case fixed to one end of two valve rods (15, 16) that the two other ends of the valve rods (15, 16) are led out of the valve casing (14) and interconnected by means of a cross bar (17) and that for the displacement of the cross bar (17) a spindle (18) connected to the actuating member (11) engages on said cross bar (17).

Fig.1

Fig.2

Fig. 3

Fig. 4